# EUROPÄISCHE PATENTSCHRIFT

(11) **EP 0 813 763 B1**
(45) Veröffentlichungstag und Bekanntmachung des Hinweises auf die Patenterteilung: **14.10.1998**
(21) Anmeldenummer: 96905697.7
(22) Anmeldetag: 01.03.1996
(51) Int. Cl.: H02B 13/02

(54) **LASTTRENNSCHALTERFELD IN GEKAPSELTEN MITTELSPANNUNGS-SCHALTANLAGEN**
SWITCH DISCONNECTOR CUBICLE IN ENCAPSULATED MEDIUM VOLTAGE SWITCH INSTALLATIONS
TABLEAU POUR SECTIONNEURS DE COUPURE EN CHARGE DANS DES INSTALLATIONS BLINDEES DE COMMUTATION A TENSION MOYENNE

(30) Priorität: 08.03.1995 DE 29504580 U
(43) Veröffentlichungstag der Anmeldung: 29.12.1997
(73) Patentinhaber: SIEMENS AKTIENGESELLSCHAFT, 80333 München (DE)
(72) Erfinder: MÜLLER, Hans-Joachim, D-61191 Rosbach (DE); POTH, Rainer, D-61118 Bad Vilbel (DE); MAHN, Gildo, D-63571 Gelnhausen (DE); SCHMITT, Peter, D-63069 Offenbach (DE)
(86) Internationale Anmeldenummer: DE9600416
(87) Internationale Veröffentlichungsnummer: WO9627934

(56) Entgegenhaltungen:
- EP-A- 0 059 255
- EP-A- 0 224 051
- EP-A- 0 436 256
- EP-A- 0 564 057
- DE-A- 3 519 761
- DE-U-29 504 580
- SIEMENS POWER ENGINEERING, Bd. 5, Nr. 3, Juni 1983, PASSAU, DE, Seiten 131-134, XP002015361 REINHARD BUCHENAU ET AL.: "New 8DJ10 Medium-Voltage Load-Break Switchgear for 6 to 24 kV, Maintenance-Free and Climate-Proof"
- E&I ELEKTROTECHNIK UND MASCHINENBAU, Bd. 110, Nr. 4, 1993, WIEN, AT, Seiten 211 - 212, XP000359591 KURT HÖLLER ET AL. 'Neue Lasttrennschalter in SF6-Technologie'

## Beschreibung

Die Erfindung betrifft Lasttrennschalterfelder mit in Lasttrennschaltkammern angeordneten Dreistellungsschaltern mit außerhalb von gasgefüllten Behältern angeordneten Antriebsmodulen und Sicherungskammern von gekapselten Mittelspannungs-Schaltanlagen mit in den gasgefüllten Behältern vorgesehenen Anschlüssen von Sammelschienen, wobei die Lasttrennschaltkammern in den gasgefüllten Behältern mit ihren Längsachsen annähernd rechtwinklig zur Frontseite desselben angeordnet sind.

Derartige Lasttrennschalterfelder von metallgekapselten Mittelspannungs-Schaltanlagen, wie aus der DE 31 07 911 bekannt, sind allgemein als Innenraumanlagen konzipiert und werden zur Energieverteilung u. a. in nicht begehbaren Kompaktstationen oder in begehbaren Netzstationen mit im allgemeinen beengten Raumverhältnissen eingesetzt. Die Dreistellungsschalter befinden sich direkt im gasgefüllten Behälter und werden im allgemeinen über gasdicht eingeschweißte Faltenbalge betätigt. Als Antriebe dienen sogenannte Sprung-Speicherantriebe, bei denen die Schalthandlungen durch die Sprungantriebe ausgeführt werden. Für Auslösungen, beispielsweise mittels Sicherungen, sind Kraftspeicher vorgesehen. Der Auslösezustand wird bekanntermaßen an Schaltstellungsanzeigern im Frontbereich der Lasttrennschalterfelder optisch angezeigt.
Die der Erfindung zugrundeliegende Aufgabe besteht darin, die Lasttrennschalterfelder mit Anschlüssen von Einfach- und Doppel-Sammelschienensystemen auszustatten und in ihrem konstruktiven Gesamtkonzept zu optimieren und insbesondere hinsichtlich der im allgemeinen vorherrschenden beengten Raumverhältnisse bei steigender Schaltleistung besser anzupassen. Erfindungsgemäß wird dies durch die Merkmale
1.1. bei den Lasttrennschaltfeldern sind die Sammelschienen als Einfach- oder Doppelsammelschienensysteme außerhalb der gasgefüllten Behälter angeordnet,
1.2. die Einfach- oder Doppelsammelschienensyteme sind oberhalb der gasgefüllten Behälters angeordnet,
1.3. die Einfach- oder Doppelsammelschienensysteme sind mit ihren Längsachsen annähernd parallel zur Fronseite der gasgefüllten Behälter angeordnet,
1.4. die Sicherungskammern sind mit ihren Längsachsen annähernd parallel der Lasttrennschaltkammern seitlich neben den gasgefüllten Behältern angeordnet,
1.5. die Antriebsmodule der Dreistellungsschalter sind jeweils als Sprungspeicherantrieb ausgeführt.

Diese Art des Einbaus der Lasttrennschaltkammern, bei der die Längsachsen derselben annähernd rechtwinklig zur Frontseite der gasgefüllten Behälter angeordnet sind, verbunden mit den als Sprungspeicherantrieben ausgeführten Antriebsmodulen, ist eine sehr kompakte Bauweise der Lasttrennschalterfelder ermöglicht. Darüber hinaus sind die einzelnen Sicherungskammern zur Aufnahme der einpoligen Sicherungseinsätze seitlich am gasgefüllten Behälter - also außerhalb der Gasfüllung - angebracht und somit jederzeit ohne größeren Aufwand zugänglich. Die Sicherungskammern sind bekanntermaßen aus Gießharz hergestellt. Mit diesem Aufbau sind die Sicherungskammern elektrisch dicht abgeschlossen und darüber hinaus weitestgehend klimaunabhängig.

Eine vorteilhafte Ausgestaltung der Erfindung sieht das Merkmal
2.1. die Lasttrennschaltkammern sind beim Anschluß von Doppel-Sammelschienensystemen im gasgefüllten Behälter untereinander angeordnet, vor, mit dem der kompakte Aufbau der Lasttrennschalterfelder auch beim Anschluß von Doppel-Sammelschienensystemen erreichbar ist.

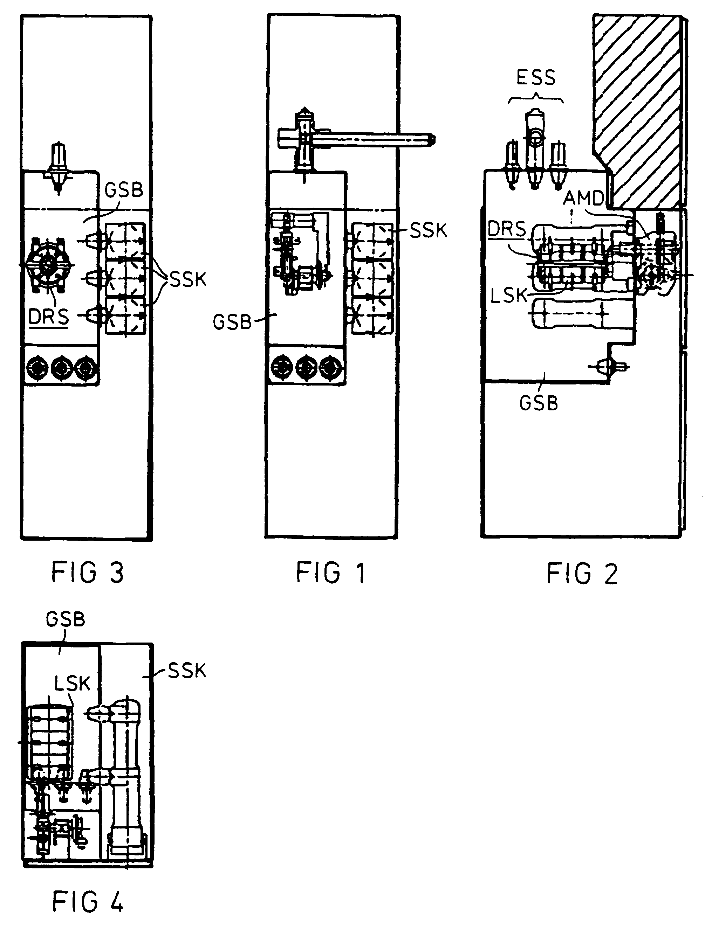

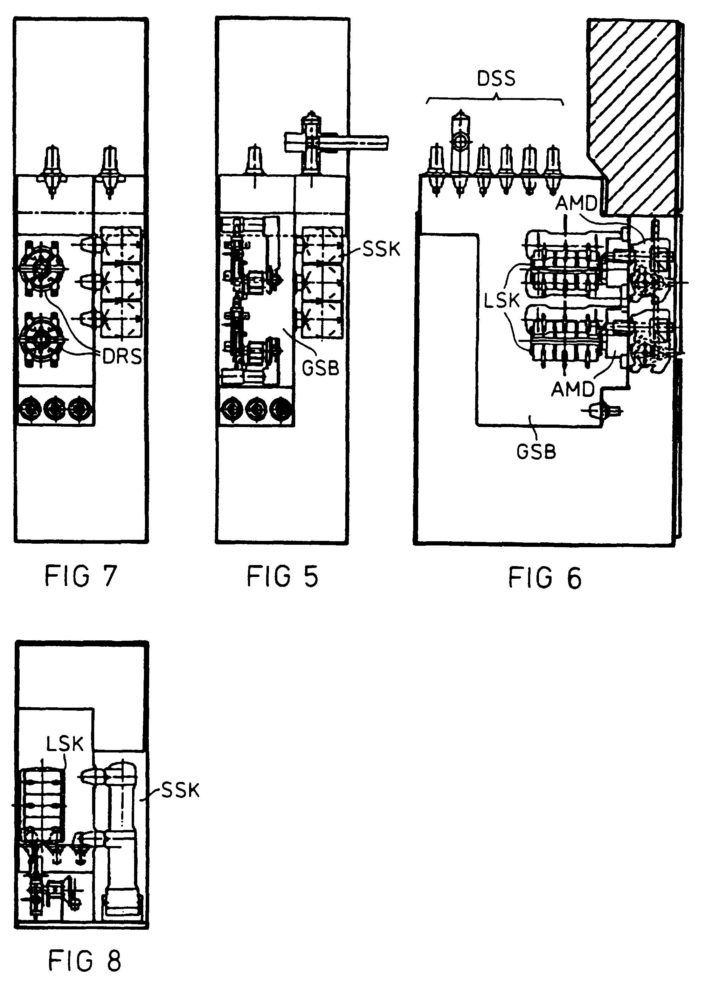

Die Erfindung wird durch zwei figürlich dargestellte Ausführungsbeispielen näher erläutert, wobei die Figuren 1 bis 4 ein Lasttrennschalterfeld mit dem Anschluß eines Einfach-Sammelschienensystems und die Figuren 5 bis 8 ein Lasttrennschalterfeld mit dem Anschluß eines Doppel-Sammelschienensystems in jeweils mehreren technischen Ansichten darstellt.

Die Figur 1 zeigt ein Lasttrennschalterfeld mit dem Anschluß eines Einfach-Sammelschienensystems ESS in der Frontansicht, während die Figur 2 das Lasttrennschalterfeld in der nach rechts gedrehten Seitenansicht und die Figur 3 einen Schnitt durch die Frontansicht darstellt. Die Figur 4 zeigt einen Schnitt durch das Lasttrennschalterfeld in der Draufsicht. In den Figuren 1 bis 4 sind die gasgefüllten Behälter GSB des Lasttrennschalterfeldes erkennbar, in dem der Dreistellungsschalter DRS innerhalb der Lasttrennschaltkammer LSK angeordnet ist. Desweiteren ist aus der Figur 2 erkennbar, daß das Antriebsmodul AMD sich außerhalb des gasgefüllten Behälters GSG befindet. Insbesondere aus der Figur 2 geht auch hervor, daß das Einfach-Sammelschienensystem ESS oberhalb des gasgefüllten Behälters GSB angeordnet und über sogenannte nicht bezeichnete Durchführungen mit der Lasttrennschaltkammer im Behälter verbunden ist. Aus den Figuren 1, 3 und 4 ist außerdem erkennbar, daß die Sicherungskammern SSK mit ihren nicht bezeichneten einpoligen Sicherungseinsätzen außerhalb des gasgefüllten Behälters GSB vorgesehen und in üblicher Weise mit ihren einpoligen Anschlüssen über sogenannte Durchführungen in den Innenraum des gasgefüllten Behälters GSB geführt sind.

Die Figuren 5, 6, 7 und 8 zeigen dagegen ein Lasttrennschalterfeld mit dem Anschluß eines Doppel-Sammelschienensystems DSS (Figur 6), bei dem die Lasttrennschaltkammern LSK innerhalb des gasgefüllten Behälters GSB untereinander angeordnet sind (Figur 6). Auch bei diesem Lasttrennschalterfeld sind die Sicherungskammern SSK außerhalb des gasgefüllten Behälters GSB so angeordnet, daß sie mit ihren Längsachsen parallel zu den Lasttrennschaltkammern LSK geführt sind, und somit für das Lasttrennschalterfeld einen kompakten Aufbau ermöglichen. Auch hier zeigt die Figur 5 das Lasttrennschalterfeld in der Frontansicht während die Figur 6 die Seitenansicht in Rechtsdrehung davon und die Figur 7 die Frontansicht im Schnitt darstellt. Die Figur 8 läßt in der Draufsicht in besonderer Weise die parallele Längsachsen der Lasttrennschaltkammern LSK und der Sicherungskammern SSK erkennen.

Mit dieser räumlichen Zuordnung der einzelnen Komponenten zueinander ist erreicht, daß die Lasttrennschalterfelder bei den üblichen Schaltleistungen im Mittelspannungsbereich einen sehr kompakten Aufbau haben können.

## Patentansprüche

1. Lasttrennschalterfelder mit in Lasttrennschaltkammern (LSK) angeordneten Dreistellungsschaltern (DRS) mit außerhalb von gasgefüllten Behältern (GSB) angeordneten Antriebsmodulen (AMD) und Sicherungskammern (SSK) von gekapselten Mittelspannungs-Schaltanlagen mit in den gasgefüllten Behältern (GSB) vorgesehenen Anschlüssen von Sammelschienen, wobei die Lasttrennschaltkammern (LSK) in den gasgefüllten Behältern (GSB) mit ihren Längsachsen annähernd rechtwinklig zur Frontseite desselben angeordnet sind,
**gekennzeichnet durch** die Merkmale
1.1. bei den Lasttrennschaltfeldern sind die Sammelschienen als Einfach- oder Doppelsammelschienensysteme (ESS oder DSS) außerhalb der gasgefüllten Behälter (GSB) angeordnet,
1.2. die Einfach- oder Doppelsammelschienensyteme (ESS oder DSS) sind oberhalb der gasgefüllten Behälters (GSB) angeordnet,
1.3. die Einfach- oder Doppelsammelschienensysteme (ESS oder DSS) sind mit ihren Längsachsen annähernd parallel zur Fronseite der gasgefüllten Behälter (GSB) angeordnet,
1.4. die Sicherungskammern (SSK) sind mit ihren Längsachsen annähernd parallel der Lasttrennschaltkammern (LSK) seitlich neben den gasgefüllten Behältern (GSB) angeordnet,
1.5. die Antriebsmodule (AMD) der Dreistellungsschalter (DRS) sind jeweils als Sprungspeicherantrieb ausgeführt.

2. Lasttrennschalterfelder nach Anspruch 1,
**gekennzeichnet durch** das Merkmal
2.1. die Lasttrennschaltkammern (LSK) sind beim Anschluß von Doppelsammelschienensystemen (DSS) im gasgefüllten Behälter (GSB) untereinander angeordnet.

## Claims

1. Switch-disconnector cubicles having three-position disconnectors (DRS), which are arranged in switch-disconnector chambers (LSK) and have operating mechanism modules (AMD) and fuse boxes (SSK), which are arranged outside gas-filled containers (GSB), of enclosed medium-voltage switchgear having busbar connections provided in the gas-filled containers (GSB), with the switch-disconnector chambers (LSK) being arranged in the gas-filled containers (GSB) with their longitudinal axes substantially at right angles to the front side of the same,
characterised by the features:
1.1 in the switch-disconnector cubicles, the busbars are arranged as single or double busbar systems (ESS or DSS) outside the gas-filled containers (GSB),
1.2 the single or double busbar systems (ESS or DSS) are arranged above the gas-filled containers (GSB),
1.3 the single or double busbar systems (ESS or DSS) are arranged with their longitudinal axes substantially in parallel with the front side of the gas-filled containers (GSB),
1.4 the fuse boxes (SSK) are arranged laterally next to the gas-filled containers (GSB) with their longitudinal axes substantially in parallel with the switch-disconnector chambers (LSK),
1.5 the operating mechanism modules (AMD) of the three-position disconnectors (DRS) are each constructed as a snap-action stored-energy mechanism.

2. Switch-disconnector cubicles according to claim 1, characterised by the feature:
2.1 in the case of the connection of double busbar systems (DSS), the switch-disconnector chambers (LSK) are arranged one beneath the other in the gas-filled container (GSB).

## Revendications

1. Tableaux de sectionneurs en charge comportant des commutateurs (DRS) à trois positions, montés dans des chambres (LSK) de sectionnement et ayant des modules (AMD) d'entraînement montés à l'extérieur de gaines (GSB) remplies de gaz, et des chambres (SSK) de sécurité d'installations de coupure moyenne tension blindées comportant des raccordements de rails collecteurs prévus dans les gaines (GSB) remplies de gaz, les chambres (LSK) de sectionnement en charge étant disposées dans les gaines (GSB) remplies de gaz en ayant leur axes longitudinaux à-peu-près à angle droit de la face frontale des gaines,
caractérisés par les dispositions
1.1. dans les tableaux de sectionnement en charge, les rails collecteurs sont disposés à l'extérieur des gaines (GSB) remplies de gaz comme systèmes (ESS ou DSS) de rails collecteurs simples ou doubles,
1.2. les systèmes (ESS ou DSS) de rails collecteurs simples ou doubles sont montés au-dessus des gaines (GSB) remplies de gaz,
1.3. les systèmes (ESS ou DSS) de rails collecteurs simples ou doubles sont montés en ayant leur axes longitudinaux à-peu-près parallèles à la face frontale des gaines (GSB) remplies de gaz,
1.4. les chambres (SSK) de sécurité sont disposées en ayant leur axes longitudinaux à-peu-près parallèles aux chambres (LSK) de sectionnement en charge, latéralement à côté des gaines (GSB) remplies de gaz,
1.5. les modules (AMD) d'entraînement des commutateurs (DRS) à trois positions sont réalisés chacun comme dispositif d'entraînement à accumulation à passage brusque.

2. Tableaux de sectionneurs en charge suivant la revendication 1, caractérisés par la disposition
2.1. les chambres (LSK) de sectionnement sont, en cas de raccordement de systèmes (DSS) de rails collecteurs doubles, superposées dans la gaine (GSB) remplie de gaz.
